Europäisches Patentamt

European Patent Office

Office européen des brevets

(19)

(11) **EP 0 992 277 B1**

(12) **EUROPEAN PATENT SPECIFICATION**

(45) Date of publication and mention
of the grant of the patent:
**07.04.2004 Bulletin 2004/15**

(51) Int Cl.⁷: **B01D 69/12**, B01D 67/00

(21) Application number: **98119157.0**

(22) Date of filing: **09.10.1998**

(54) **Dry semipermeable reverse osmosis membrane and process for preparing the same using saccharides**

Trockene halbdurchlässige Umkehrosmosemembran und Verfahren zu ihrer Herstellung unter Verwendung von Sacchariden

Membrane semi-perméable sèche pour l'osmose inverse et son procédé de fabrication utilisant des saccharides

(84) Designated Contracting States:
**DE FR GB**

(43) Date of publication of application:
**12.04.2000 Bulletin 2000/15**

(73) Proprietor: **SAEHAN INDUSTRIES, INC.**
**Kyongsangbuk-Do (KR)**

(72) Inventors:
 • **Young Seo, Yoon**
  **Seoul (KR)**
 • **Dae Woo, Ihm**
  **Kangnam-Ku, Seoul (KR)**
 • **Soon Sik, Kim**
  **Songpa-Ku, Seoul (KR)**
 • **Ki Seop, Park**
  **Suwon-Si, Kyongki-Do (KR)**

(74) Representative: **Störle, Christian, Dr. et al**
**Geyer, Fehners & Partner,**
**Perhamerstrasse 31**
**80687 München (DE)**

(56) References cited:
**EP-A- 0 228 248**   **EP-A- 0 473 290**
**US-A- 4 830 885**   **US-A- 4 983 291**
**US-A- 5 658 460**

 • **PATENT ABSTRACTS OF JAPAN vol. 010, no. 071 (C-334), 20 March 1986 & JP 60 209207 A (SUMITOMO BAKELITE KK), 21 October 1985 & DATABASE WPI Section Ch, Week 8548 Derwent Publications Ltd., London, GB; Class A88, AN 85-300646**

**Description**

BACKGROUND OF THE INVENTION

Field of the invention

The present invention relates to a dry type semipermeable reverse osmosis membrane which is superior in % salt rejection and flux upon filtering brackish water and sea water and a process for preparing the same using saccharides.

Description of the Prior Art

There have been developed various selective membranes of which micro filtration membranes, ultrafiltration membranes and reverse osmosis membranes are representative. As well known, they can separate dissolved substances from solvents. Of them, reverse osmosis membranes can filter off such a small substance as in the molecular level and are economically most favorable in straining out salts from brackish or sea water to provide water for household, agricultural and industrial uses.

A critical factor in desalination is the performance of membrane in terms of salt rejection and flux. The condition which the membrane process meets in order to be economically more favorable than other processes such as evaporation , ion exchange, etc, includes a flux, for example, greater than 10 gfd (gallons/ft$^2$ day) at 800 psi for sea water and a flux greater than 15 gfd at 225 psi for brackish water while maintaining greater than 97% salt rejection.

Among the known semipermeable reverse osmosis membranes for use in desalination are polyamide membranes. Crosslinked aromatic polyamide membranes, such as those disclosed in U.S. Pat. Nos. 3,904,519, 3,996,318 and 4,277,344, are of particular interest.

Particularly, the membrane described in J.S. Pat. No. 4,277,344, issued to Cadotte, shows 99.5% salt rejection and a flux of 35 gfd at 1,000 psi for sea water. This type of reverse osmosis membrane is prepared by depositing on a porous polysulfone support the interfacial reaction product of an aromatic polyamine having at least two primary amine substituents with an aromatic acyl halide having at least three acyl halide substituents. Most preferable is one which is prepared by the interfacial reaction of a solution of meta-phenylenediamine in water with a solution of trimesoyl chloride in trichlorotrifluoroethane (Freon TF, Du Pont).

Freon, a non-flammable solvent, is good for interfacial reaction. However, the employment of Freon TF has been severely discouraged since 1990 due to its effect on ozone depletion and the production of all Freon solvents will be banned completely by 2002. Thus, other organic solvents such as hydrocarbons are suggested for the production of such membranes. In fact, hexane was recruited in the above-cited and other patents. To avoid the fire hazardous nature of hexane due to its high volatility, other hydrocarbons with higher boiling temperatures are now recommended for the preparation. However, the use of the hydrocarbons of higher boiling temperatures requires that the resulting membranes be dried for a longer time or at an elevated temperature, which causes a loss in the permeability of the membrane. In order to prevent such flux loss, the following patents suggest use of various additives or post-treatment process.

U.S. Pat. No. 4,872,984, issued to Tomaschke, teaches use of a solution of amine salts in water in the interfacial reaction to with an acyl halide in a 8-12 carbon atom hydrocarbon solvent, and heating of the resulting membranes at 70-100 °C. For blackish water, the amine salts enable a flux of about 20 gfd at 220 psi.

U.S. Pat. Nos. 4,950,404 and 4,983,291, issued to Chau et al., disclose interfacial reactions which are performed in amine solutions added with protic solvent or aprotic solvents, post-treatments of membrane with acidic solutions, and the heating of the membranes up to 100 °C, thereby preventing flux loss.

U.S. Pat. No. 5,658,460, issued to Cadotte et al., shows an interfacial polymerization in an amine solution added with inorganic ammonium salts, followed by drying at about 95 °C, thereby improving the flux of membrane to 24 gfd at brackish water conditions.

U.S. Pat. Nos. 4,950,404 and 4,983,291 disclose the effect of citric acid on the preservation of membrane permeability.

All of the compcunds, except for citric acid, which are added in the amine solutions are harmful to humans. Citric acid itself is of high acidity, so that it may damage the membrane, lowering % salt rejection.

SUMMARY OF THE INVENTION

Therefore, it is an object of the present invention to overcome the above problems encountered in prior arts and to provide a dry-type semipermeable reverse osmosis membrane which can flow sea water or brackish water therethrough at high flux rates with high % salt rejection.

It is another object of the present invention to provide a process for preparing the dry semipermeable reverse osmosis membrane using saccharides.

The dry semipermeable reverse osmosis membrane comprises a semipermeable barrier deposited on a porous support backing material.

A particular membrane of the present invention comprises a reaction product resulting from the reaction of polyacylhalide, polysulfonylhalide or polyisocyanate with polyamine. The reaction product is deposited on a porous support backing material. The resulting membrane may be utilized to treat a brackish or sea water source.

In one aspect, an embodiment of the invention resides in a dry semipermeable membrane prepared by coating a porous support backing material with an aqueous solution of a polyamine which contains butoxy ethanol and urea, removing excess solution, and contacting the porous support with a solution of a polyacylhalide, a polysulfonylhalide or a polyisocyanate in an organic solvent to form a reaction on the surface of the porous support.

Another embodiment of this invention is found in a dry reverse osmosis membrane which is prepared by coating a porous polysulfone support with an aqueous solution of meta-phenylene diamine which contains butoxy ethanol and urea, removing excess solution, and contacting the coated polysulfone with trimesoyl chloride, isophthaloyl chloride, terephthaloyl chloride or the mixture thereof in a hydrocarbon with a high boiling point, such as Cypar® (Shell), to form a reaction product on the surface of the polysulfone support.

A specific embodiment of this invention is found in a process for the preparation of a dry reverse osmosis membrane, which comprises coating a polysulfone support with an aqueous solution of meta-phenylenediamine which contains butoxy ethanol and urea, removing excess solution, contacting the coated polysulfone support with a solution of trimesoyl chloride in a hydrocarbon with a high boiling point, to form a reaction product on the surface of the porous polysulfone support, rinsing the resulting composite membrane with a basic aqueous solution and then, with a deionized water, dipping the membrane in a saccharide solution, and heating the membrane at 90°C for about 3 minutes to yield a dry membrane.

A further object of this invention is to use inexpensive and non-harmful chemicals. The saccharides are safer and more inexpensive chemicals, while showing a similar effect on the properties of membrane, compared to other chemicals such as tertiary amine salts, inorganic ammonium salts and citric acid.

Other objects and embodiments are found in the following detailed description of the invention.

DETAILED DESCRIPTION OF THE INVENTION

The present invention pertains to the preparation of a dry reverse osmosis membrane which can flow sea water or brackish water therethrough at high flux rates with high % salt rejection in addition to being favorable in cost and safely to the human body. The process of preparing the membrane comprises the steps of coating an aqueous solution of a polyamine which contains butoxy ethanol and urea on a micro porous support and removing the excess solution by rolling, sponging or air knifing. Thereafter, the surface of the coated support, free of the amine solution, is contacted with a solution of polyacyl halide, polysulfonyl halide or polyisocyanate in an organic solvent, among which polyacyl halide is preferred. The interfacially polymerized product resulting frcm the reaction between the polyamine and the polyacyl halide is formed and adsorbed on the porous support. The resulting composite membrane is rinsed with a basic aqueous solution and a deionized water. Following dipping in a saccharide solution, heating of the composite membrane at an elevated temperature, e.g. at 90°C for about 3 minutes, produces a dry reverse osmosis membrane.

Preferably, the micro porous support has a pore size ranging from 1 to 500 nanometers. If the pores are larger than 500 nanometers, the ultrathin film of the surface layer sags into the pore, thus disrupting the flat sheet configuration. Examples of the useful micro porous supports in the present invention include a polysulfone, a polyethersulfone, a polyimide, a polyamide, a polypropylene, and various halogenated polymers such as polyvinylidenefluoride.

By use of either a hand coating or continuous operation, the porous support may be coated with an aqueous solution of monomeric polyamines which may comprise alkanediamines such as 1,3-propanediamine and their homologs with or without N-alkyl or arylsubstituents, cyclic polyamines such as cyclohexane diamine, piperazine and para-phenylenediamine, and the substituted derivative thereof wherein the substituent includes an alkyl group such as a methyl group or an ethyl group, an alkoxy group such as a methoxy group or an ethoxy group, a hydroxy alkyl group, a hydroxy group or a halogen atom. Besides, the polyamines may comprise N,N'-dimethyl-1,3-phenylenediamine, xylene diamine, benzidine and its derivatives or a mixture thereof. The preferred polyamines employed in the present invention are aromatic primary diamines, more preferably meta-phenylenediamine.

The polyamine aqueous solution contains the polyamines at an amount of about 0.1 to 20 % by weight and preferably about 0.5 to 8 % by weight and ranges, in pH, from about 7 to 10. The amine solution further comprises butoxy ethanol and urea.

The porous support coated with the polyamine solution, after removing the excess solution from the surface of the support, is contacted with a solution of polyacylhalide in an organic solvent by a well-known means, such as dipping or spraying, for about 5 seconds to 10 minutes and preferably about 20 seconds to 4 minutes. Examples of the polyacyl halides include Di- or tricarboxylic acid halides such as trimesoyl chloride (TAC), isophthaloyl chloride (IPC), terephthaloyl chloride (TAC) and the mixtures thereof. In the solution, there is present the aromatic polyacyl halide, TAC or a mixture of TAC, IPC and TAC at an amount of about 0.005 to 5% by weight based on the total weight of the solution and preferably about 0.01 to 0.5%. The organic solvents employed in the process of this invention may be any water-immiscible liquid, such as hexane, cyclohexane, heptane, alkanes having from 7 to 12 carbon atoms, and halogenated hydrocarbons such as the Freon series. The preferred organic solvents are alkanes having from 7 to 12 carbon atoms and mixtures thereof. For example, Cypar® is a mixture of such hydrocarbons produced by Shell.

The membrane which is obtained from the interfacial reaction between the polyamine solution and the polyacyl halide, is dipped in a solution of a saccharide, especially in water or alcohol, followed by drying at elevated temperature, e.g. at 40-110 °C for 5 second to 48 hours. It is preferable that the saccharide is present at an amount of about 0.1-50 % by weight based on the total amount of the solution, and more preferably about 5-10 %. In order to improve the penetration into the membrane, surfactants or alcohols may be added at an amount of about 0.1-10 % by weight to the solution.

Available saccharides in the present invention are those which are not more than 1,000 in molecular weight. Concrete examples of the saccharides include glyceraldehyde, glycerol, anhydroerythritol, dithioerythritol, erythritol, erythrose, threitol, adonitol, arabinose, arabitol, deoxyribose, lyxose, ribose, xylitol, xylose, allose, altrose, anhydroglucopyranose, ascorbic acid, arbutin, chloralose, deoxygalactose, deoxyglucose, digitoxose, dulcitol, fructose, fucose, galactosamine, galactose, galacturonic acid, glucuronolactone, gulonicacidlactone, gulonolactone, helicin, hexadecanolylascorbic acid, lnositol, lsoascorbic acid, mannitol, mannose, methylgalactopyranoside, methylglucamine, methylglucoside, methymannopyranoside, methylxylopyranoside, sorbitol, sorbose, talose, n-acetyl-d-galactosamine, n-acetyl-$\alpha$-d-glucosamine, sapogenin glycosides, amygdalin, cellobiose, lactobionic acid, lactose, lactulose, maltose, melibiose, palatinose, saccharose and turanose. The solvent for the saccharide solution is pure water, alcohols or the mixtures thereof.

The present invention utilizes the saccharides as a flux preserver. In other words, the saccharides function as an anti-pore shrinker. In detail, they penetrate into the micro porous support layer, stick to its inner shells and form a thin film by which the pore shrinkage induced upon heat-drying of the wet micropores can be prevented. This special properties of saccharides are attributed to the molecular weight and size adequate to penetrate into the micro porous support layer. Actually, the support ranges, in pore size, from 1 to 500 nanometers while the top layer coated with the poly amide has a pore size of about 100 nanometers. Thus, a molecular weight less than 1,000 and preferably as much as 100-300 is required to make the penetration into the membrane easy, and the saccharides all meet the requirement. The saccharide treatment gives a better flux than do other conventional treatments because the saccharides have many-OH groups so that they can strongly bond to the porous support via hydrogen-bond. In addition, saccharides are such neutral compounds as to have no deleterious influence on the polyamide skin layer. Moreover, saccharides are not harmful to the human body, so they can be safely used for the membrane modules for treating drinking water.

A better understanding of the present invention may be obtained in light of the following examples which are set forth to illustrate, but are not to be construed to limit the present invention. In the following Examples, the flux capacity of the membranes was measured by passing an aqueous solution containing 200 ppm of NaCl through the membrane at 225 psi at 25 °C. The percent salt rejection was calculated according to the following equation:

$$R(\%) = (1 - \frac{C_p}{C_f})x100$$

wherein, R is % salt rejection, $C_f$ is a concentration of the solute present in the water incoming, and $C_p$ is a concentration of the solute present in the water outgoing.

COMPARATIVE EXAMPLE 1

A micro porous polyethersulfone support, 140 μm thick, including the backing non-woven fabric was soaked in an aqueous solution containing 2 wt % of meta-phenylenediamine(MPD) for 40 seconds. The support was drained and nip rolled to remove excess MPD solution. Then, the coated support was dipped in 0.1 wt % solution of trimesoyl chloride (TAC) in Cypar® (Shell Corp.) for 1 minute, followed by draining an excess of the solution off from the support. The resulting composite membrane was rinsed with 0.2% $Na_2CO_3$ aqueous solution at 40-60°C and then, with deionized water sufficiently. Following being dipped into 5% glucose aqueous solution, it was heated at 90°C for 3.5 minutes. The performance of the reverse osmosis membrane thus obtained was measured by passing an aqueous solution containing 200 ppm of NaCl through the membrane at 225 psi. The salt rejection was 97.7% and the flux was 25. 3 gfd.

COMPARATIVE EXAMPLE 13

The same procedure as in Example 1 was repeated, except that no saccharides solutions were used and the drying step was omitted. The salt rejection was 97.9% and the flux was 24.5 gfd under the same test conditions as in Example 1.

COMPARATIVE EXAMPLE 2

The same procedure as in Example 1 was repeated, except that a 10 wt % fructose solution was used. The salt rejection was 98.0% and the flux was 24.4 gfd under the same test conditions as in Example 1.

EXAMPLE 3

The procedure of Example 2 was repeated, except that the MPD solution further comprised 2 wt % butoxy ethanol and 1% urea. The salt rejection was 97.7% and the flux was 32.5 gfd under the same test conditions as in Example 1.

COMPARATIVE EXAMPLES 4-14

The same procedure of Example 1 was repeated, using saccharides as indicated in Table 1, below. The test results are shown in Table 1, below.

TABLE 1

| No. of Examples | Saccharides | Conc. (wt%) | Flux (GFD) | Rejection(%) |
| --- | --- | --- | --- | --- |
| 4 | Glucose | 5 | 24.9 | 97.7 |
| 5 | Fructose | 5 | 24.5 | 98.1 |
| 6 | Lactose | 5 | 24.2 | 97.1 |
| 7 | Galactose | 5 | 24.1 | 97.5 |
| 8 | Galactose | 10 | 25.3 | 96.8 |
| 9 | Maltose | 5 | 22.7 | 96.2 |
| 10 | Sucrose | 5 | 22.5 | 97.0 |
| 11 | Saponin | 5 | 24.7 | 97.8 |
| 12 | Xylose | 5 | 22.8 | 95.7 |
| 13 | Ascorbic acid | 5 | 24.3 | 96.6 |
| 14 | Sorbitol | 5 | 22.9 | 96.0 |

As described hereinbefore, the dry-type semipermeable reverse osmosis membrane according to the process of the invention can filter brackish water or sea water at a high flux with a high % salt rejection and be safely used for treating drinking water. In addition, the polyamide skin layer of the membrane is not deleteriously affected in the post-treatment, so that the membrane can be prepared at high yields.

**Claims**

1.   A process for preparing a dry-type semipermeable reverse osmosis membrane, comprising the steps of:

coating a porous support with an aqueous solution of polyamine which contains butoxy ethanol and urea;
removing excess solution;
contacting the coated porous support with a solution of polyacyl halide, polysulfonyl halide or polyisocyanate in an organic solvent to form an interfacial reaction product on the surface of the porous support;
rinsing the resulting membrane in a basic aqueous solution;
washing the membrane with deionized water;

dipping the membrane in a saccharide solution; and
heating the membrane at an elevated temperature.

2. A process as set forth in Claim 1, wherein said saccharide solution comprises a saccharide selected from the group consisting of glyceraldehyde, glycerol, anhydroerythritol, dithioerythritol, erythritol, erythrose, threithol, adonitol, arabinose, arabitol, deoxyribose, lyxose, ribose, xylitol, xylose, allose, altrose, anhydroglucopyranose, ascorbic acid, arbutin, chloralose, deoxygalactose, deoxyglucose, digitoxose, dulcitol, fructose, fucose, galactosamine, galactose, galacturonic acid, gluconic acid, glucolactone, glucosamine, glucose, glucuronamide, giucuronic acid, glucuronolactone, gulonicacidlactone, gulonolactone, helicin, hexadecanoylascorbic acid, inositol, isoascorbic acid, mannitol, mannose, methylxylopyranoside, sorbitol, sorbose, talose, n-acetyl-d-galactosamine, n-acetyl-$\alpha$-d-glucosamine, sapogenin glycosides, amygdalin cellobiose, lactobionic acid, lactose, lactulose, maltose, melibiose, palatinose, saccharose, turanose.

3. A process as set forth in Claim 1 or 2, wherein said polyamine is meta-phenylenedamine.

4. A process as set forth in anyone of Claims 1 to 3, wherein said aqueous solution of polyamine contains a polyamine at an amount of about 0.1-20 % by weight.

5. A process as set forth in anyone of Claims 1 to 4, wherein said saccharide solution uses as a solvent one selected from pure water, alcohols and the mixtures thereof.

6. A process as set forth in anyone of Claims 1 to 5, wherein said saccharide solution contains a saccharide at an amount of about 0.1-50 % by weight.

7. A process as set forth in anyone of Claims 1 to 6, wherein said saccharide solution contains a surfactant or alcohol at an amount of about 0.1-10 % by weight.

8. A dry-type reverse osmosis membrane, prepared by the process of anyone of Claims 1 to 7.

**Patentansprüche**

1. Verfahren zur Herstellung einer trockenen, semipermeablen Umkehrosmosemembran, das die Schritte umfaßt:

Beschichten eines porösen Trägers mit einer wäßrigen Polyaminlösung, die Butoxyethanol und Harnstoff enthält;
Entfernen überschüssiger Lösung;
Kontaktieren des beschichteten porösen Trägers mit einer Lösung von Polyacylhalogenid, Polysulfonyhalogenid oder Polyisocyanat in einem organischen Lösungsmittel, um ein Grenzflächenreaktionsprodukt an der Oberfläche des porösen Trägers zubilden;
Spülen der resultierenden Membran in einer basischen wäßrigen Lösung;
Waschen der Membran mit deionisiertem Wasser;
Eintauchen der Membran in eine Saccharidlösung, und
Erwärmen der Membran auf eine erhöhte Temperatur.

2. Verfahren nach Anspruch 1, wobei die Saccharidlösung ein Saccharid umfaßt, das unter Glyceraldehyd, Glycerin, Anhydroerythritol, Dithioerythritol, Erythritol, Erythrose, Threithol, Adonitol, Arabinose, Arabitol, Desoxyribose, Lyxose, Ribose, Xylitol, Xylose, Allose, Altrose, Anhydroglucopyranose, Ascorbinsäure, Arbutin, Chloralose, Desoxygalactose, Desoxyglucose, Digitoxose, Dulcitol, Fructose, Fucose, Galactosamin, Galactose, Galacturonsäure, Gluconsäure, Glucolacton, Glucosamin, Glucose, Glucuronamid, Glucuronsäure, Glucuronolacton, Gulonicsäurelacton, Gulonolacton, Helicin, Hexadecanoylascorbinsäure, Inositol, Isoascorbinsäure, Mannitol, Mannose, Methylxylopyranosid, Sorbitol, Sorbose, Talose, N-Acetyl-D-galactosamin, N-Acetyl-$\alpha$-D-glucosamin, Sapogeninglycosiden, Amygdalin-Cellobiose, Lactobionsäure, Lactose, Lactulose, Maltose, Melibiose, Palatinose, Saccharose und Turanose ausgewählt ist.

3. Verfahren nach Anspruch 1 oder 2, wobei das Polyamin meta-Phenylenediamin ist.

4. Verfahren nach einem der Ansprüche 1 bis 3, wobei die wäßrige Polyaminlösung ein Polyamin in einer Menge von etwa 0,1 bis 20 Gew.-% enthält.

5. Verfahren nach einem der Ansprüche 1 bis 4, wobei die Saccharidlösung als Lösungsmittel ein solches verwendet, das aus reinem Wasser, Alkoholen und deren Gemischen ausgewählt ist.

6. Verfahren nach einem der Ansprüche 1 bis 5, wobei die Saccharidlösung ein Saccharid in einer Menge von etwa 0,1 bis 50 Gew.-% enthält.

7. Verfahren nach einem der Ansprüche 1 bis 6, wobei die Saccharidlösung ein oberflächenaktives Mittel oder einen Alkohol in einer Menge von etwa 0,1 bis 10 Gew.-% enthält.

8. Trockene Umkehrosmosemembran, hergestellt durch das Verfahren nach einem der Ansprüche 1 bis 7.

**Revendications**

1. Procédé de préparation d'une membrane d'osmose inverse semi-perméable du type sec, comprenant les étapes suivantes :

   le revêtement d'un support poreux avec une solution aqueuse de polyamine, qui contient du butoxy éthanol et de l'urée ;

   l'élimination de la solution en excès ;

   la mise en contact du support poreux revêtu avec une solution de poly(halogénure de d'acyle), de poly(halogénure de sulfonyle), ou de poly-isocyanate, dans un solvant organique, de façon à former un produit de réaction interfaciale à la surface du support poreux;

   le rinçage de la membrane résultante dans une solution aqueuse basique;

   le lavage de la membrane avec de l'eau désionisée;

   le trempage de la membrane dans une solution de saccharide; et

   le chauffage de la membrane à une température élevée.

2. Procédé selon la revendication 1, dans lequel ladite solution de saccharide comprend un saccharide choisi dans le groupe constitué du glycéryladéhyde, du glycérol, de l'anhydroérythritol, du dithioérythritol, de l'érythrose, du thréitol, de l'adonitol, de l'arabinose, de l'arabitol, du désoxyribose, du lyxose, du ribose, du xylitol, du xylose, de l'allose, de l'altrose, de l'anhydroglucopyranose, de l'acide ascorbique, de l'arbutine, du glucochloral, du désoxygalactose, du désoxyglucose, du digitoxose, du dulcitol, du fructose, du fucose, de la galactosamine, du galactose, de l'acide galacturonique, et de l'acide gluconique, de la glucolactone, de la glucosamine, du glucose, du glucuronamide, de l'acide glucuronique, de la glucuronolactone, de la lactone de l'acide gulonique, de la gulonolactone, de l'hélicine, de l'acide hexadécanoylascorbique, de l'inositol, de l'acide érythorbique, du mannitol, du mannose, du méthylxylopyranoside, du sorbitol, du sorbose, du talose, de la n-acétyl-d-galactosamine, de la n-acétyl-a-d-glucosamine, des glyodosides de sapogénine, de l'amygdaline, de la cellobiose, de l'acide lactobionique, du lactose, du lactulose, du maltose, du mélibiose, du palatinose, du saccharose, du turanose.

3. Composé selon la revendication 1 ou 2, dans lequel ladite polyamine est la méta-phénylènediamine.

4. Procédé selon l'une quelconque des revendications 1 à 3, dans lequel ladite solution aqueuse de polyamine contient une quantité de polyamine comprise entre 0,1 et 20 % en poids environ.

5. Procédé selon l'une quelconque des revendications 1 à 4, dans lequel ladite solution de saccharide utilise comme solvant un solvant choisi parmi l'eau pure, les alcools et les mélanges de ceux-ci.

6. Procédé selon l'une quelconque des revendications 1 à 5, dans lequel ladite solution de saccharide contient une quantité de saccharide comprise entre 0,1 et 50 % en poids environ.

7. Procédé selon l'une quelconque des revendications 1 à 6, dans lequel ladite solution de saccharide contient une quantité de surfactant ou d'alcool comprise entre 0,1 et 10 % en poids environ.

8. Membrane d'osmose inverse semi-perméable sèche, fabriquée selon le procédé de l'une quelconque des revendications 1 à 7.